# EUROPEAN PATENT APPLICATION

(11) **EP 2 988 023 A1**
(43) Date of publication of application: **24.02.2016**
(21) Application number: 13882251.5
(22) Date of filing: 28.05.2013
(51) Int. Cl.: F16H 48/38, G01C 15/00

(54) **ADJUSTING MECHANISM AND LASER COLLIMATOR HAVING SAME**

(30) Priority: 18.04.2013 CN 201310136036
(71) Applicant: Changzhou Huada Kejie Opto-Electro Instrument CO., LTD., Jiangsu 213023 (CN)
(72) Inventor: ZHANG, Ou, Changzhou Jiangsu 213023 (CN); PENG, Dongdong, Changzhou Jiangsu 213023 (CN)
(74) Representative: Ridderbusch, Oliver
(86) International application number: PCT/CN2013/000628
(87) International publication number: WO 2014/169405

(57) **Abstract**

Provided here are an adjusting mechanism and laser collimator, the adjusting mechanism comprising of: a differential, having a first output shaft, a second output shaft, a first driven gear and a second driven gear. Disposed at one end of the second output shaft extending out of the differential; a first stepping motor with a first drive gear provided on a rotary shaft thereof, the first drive gear being engaged with the first driven gear; a second stepping motor with a second drive gear provided on a rotary shaft thereof, the second drive gear being engaged with the second driven gear; a screw rod having a first end thereof connected to the first output shaft, and rotating along with the rotation of the first output shaft with a moving block threadably connected to the screw rod, and moving in the axial direction of the screw rod with the rotation of the screw rod; and the first output shaft rotates with the in-phase rotation, reverse rotation or separate rotation of the first and second stepping motors, so as to drive movement of the moving block.

## Description

### Technical field

An adjusting mechanism is provided in the invention for the first aspect, especially for a leveling mechanism applied for lase collimator.

A laser collimator comprising above adjusting mechanism is provided in the invention for the second aspect.

### Background of the Invention

The laser collimators are normally arranged on a suspension means or a swinging bracket and an adjusting mechanism is applied to level the suspension means or swinging bracket so that the laser transmitter is at the horizontal level.

For example, the adjusting mechanism in prior art is to level the swinging bracket by a single motor. In case of single motor, it is impossible to take both of the accuracy and speed into account due to the inherent characteristic of the motors.

Therefore, an adjusting mechanism which can take both of the accuracy and speed into account is needed.

### Summary of the Invention

In order to overcome the above defect, the invention implements an adjusting mechanism which can take both the accuracy and speed into account through the cooperation of the dual motors and differential.

In order to achieve above purpose, the invention is provided with an adjusting mechanism in the first aspect, comprising of a differential having a first output shaft, a second output shaft with a first driven gear, and a second driven gear disposed at one end of the second output shaft extending out of the differential; a first stepping motor with a first drive gear provided on a rotary shaft thereof; the first drive gear being engaged with the first driven gear; a second stepping motor with a second drive gear provided on a rotary shaft thereof; the second drive gear being engaged with the second driven gear; a screw rod having a first end thereof connected to the first output shaft, and rotating along with the rotation of the first output shaft; and a moving block threadably connected to the screw rod, moving in the axial direction of the screw rod with the rotation of the screw rod. Therefore the first output shaft rotates with the in-phase rotation, reverse rotation or separate rotation of the first and second stepping motors, so as to drive the movement of the moving block.

Preferably, the adjusting mechanism in the invention further comprises a housing, the differential, first stepping motor, second stepping motor, screw rod and moving block which is provided in the housing.

Preferably, a screw rod stationary hole and screw rod stationary ring is provided on the housing in the invention, the second end of the screw rod is fixed on the housing through the screw rod stationary hole and the screw rod stationary ring.

Preferably, a limit rod parallel to the screw rod is provided on the housing in the invention, the moving block extends a pair of parallel rods and the limit rod is positioned between the pair of parallel rods.

Preferably, the moving block, the pair of parallel rod and limit rods are positioned around to form a connecting area and a gap of the pair of parallel rods is provided along the axial direction of the screw rod in the invention.

Preferably, a limit piece is provided on the moving block in the invention, the position of the housing opposite to the limit piece is provided with a limit PCB, the limit PCB and limit piece cooperate with each other to limit the moving distance of the moving block.

The invention is further provided with a laser collimator in the second aspect, comprising a swinging bracket, a laser and a level sensor which are fixed connected with each other, wherein the laser collimator comprises an above adjusting mechanism, wherein the swing bracket is connected with the moving block of the adjusting mechanism, the level sensor is electrically connected with the first stepping motor and the second stepping motor, the first stepping motor and second stepping motor rotate in-phase, reversely or separately.

As an alternative embodiment, the invention is further provided with a laser collimator comprising a swinging bracket, a laser and a level sensor which are fixed connected with each other, wherein the laser collimator comprises an above adjusting mechanism, wherein the swinging bracket is provided with a connecting rod, the connecting rod extends to the gap between the pair of parallel rods, the level sensor is electrically connected with the first stepping motor and second stepping motor of the adjusting mechanism, the first stepping motor and second stepping motor rotate in-phase, reversely or separately.

As another alternative embodiment, the invention is further provided with a laser collimator in the second aspect comprising a swinging bracket, a laser and a level sensor which are fixed connected with each other, wherein the laser collimator comprises an above adjusting mechanism, wherein the swinging bracket is provided with a connecting rod, the connecting rod extends to the gap between the pair of parallel rod, the level sensor is electrically connected with the first stepping motor and second stepping motor of the adjusting mechanism, the first stepping motor and second stepping motor rotate in-phase, reversely or separately.

Preferably, the laser collimator further comprises a control device applied to control the operation mode of the first stepping motor and second stepping motor based on the position information feedbacked from the level sensor.

Based on above arrangement, the adjusting mechanism provided by the invention implements that two motors can work simultaneously when the deviation between the swinging bracket and horizontal position is in existance by the cooperation of the dual motors and differential so that the rapid rotation speed of the screw rod makes the swinging bracket approach the horizontal position quickly. When the swinging bracket is about to approach the horizontal position, it is possible to slow down the rotation speed of the screw rod by only running a single motor or change the rotation direction of the two motors so that the rotation of the screw rod can be controlled precisely.

### Brief Descriptions of the Figures

Figure 1 shows an explosive view of the adjusting mechanism in one preferable embodiment.
Figure 2 shows an explosive view of the differential of the adjusting mechanism in one preferable embodiment.
Figure 3 shows a plan view of the limit piece in one preferable embodiment.
Figure 4A-4C shows a schematic diagram of the working status of the limit piece in one preferable embodiment.
Figure 5 shows a schematic diagram of the laser collimator in another embodiment in the invention.
Figure 6 shows a schematic diagram of the laser collimator in another embodiment in the invention.

### Detailed Description of the Invention

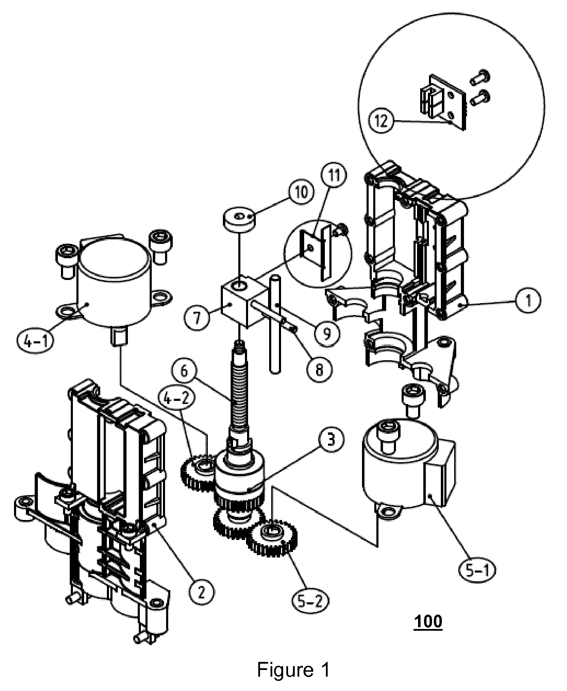

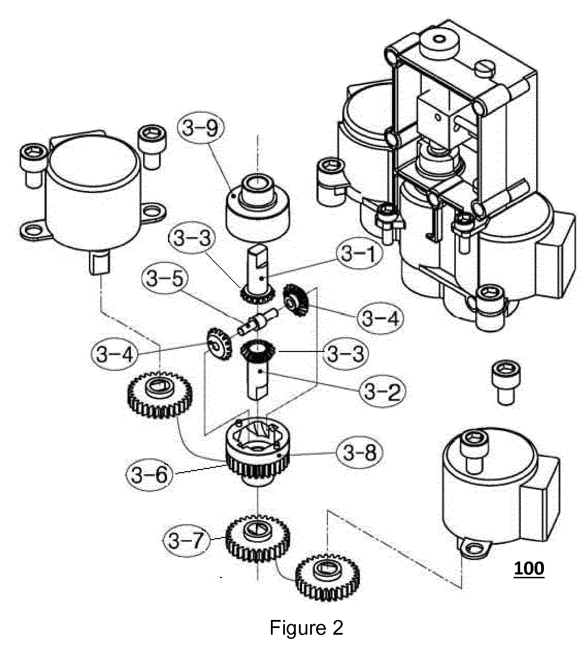

The advantages of the present invention will be detailed and described in reference to the drawings and the embodiments as follows:
According to figure 1 and 2, figure 1 shows an adjusting mechanism 100 in one preferable embodiment in the invention. The adjusting mechanism 100 is provided with a first case body 1 and a second case body 2. These two case bodies are combined to form a housing. A differential 3, a first stepping motor 4-1, a first gear 4-2, a second stepping motor 5-1, a second active gear 5-2, a screw rod 6 and a moving block 7.

The differential 3 comprises a first output shaft 3-1 with a differential gear 3-3 at one end, a second output shaft 3-2 and a pair of differential planetary gear 3-4 connected by a differential planetary gear shaft 3-5, wherein, the planetary gear 3-4 is engaged with the differential gear 3-3. The differential 3 is further provided with an upper housing 3-9 and lower housing 3-8 which are combined with each other. The combination of the upper housing and lower housing can form a receiving space so that the receiving space can receive the components 3-1 to 3-5, and the output ends of the first output shaft 3-1 and the second output shaft 3-2 extend out of the upper housing 3-9 or lower housing 3-8 respectively. The periphery of the lower housing 3-8 is provided with a first driven gear 3-6 and the output end of the second output shaft 3-2 is provided with a second driven gear 3-7.

The first active gear 4-2 is positioned on the rotation shaft of the first stepping motor 4-1, respectively, the second active gear 5-2 is positioned on the rotation shaft of the second stepping motor 5-1. The first active gear 4-2 is engaged with the first driven gear 3-6 and the second active gear 5-2 is engaged with the second driven gear 3-7.

One end of the screw rod 6 is attached to the output of the first output shaft 3-1 of the differential 3 while the other end extends into the screw rod stationary hole arranged on the housing so that the other end is attached to the screw rod stationary ring 10. Hence, the screw rod rotates with the rotation of the first output shaft 3-1. The position of the screw rod 6 relative to the housing maintains fixed when the screw rod 6 rotates. The moving block 7 is threadably connected to the screw rod 6.

Based on the arrangement, the rotation of the first output shaft 3-1 is driven by the separative rotation of the first stepping motor 4-1, the separative rotation of the second stepping motor 5-1 or the in-phase/reverse rotation of the two stepping motors so that it drives the rotation of the screw rod 6, and further, drives the moving block 7 reciprocate along the axial direction of the screw rod 6.

It should be noted that it is known to all that the differential is a differential component which is able to drive the rotation motion from a single shaft to two shafts and drive the two shafts rotate in different rotation speeds. The differential is normally provided with an input shaft and two output shafts. The present invention use one of the two output shafts as the second input shaft based on the operation principle of the differential so that the remaining output shaft can create different rotation speed and rotation direction based on the different input transmission of the two output shafts. For example, it is assumed that the drive ratio provided by the first stepping motor is 0.75 in the invention and the drive ratio provided by the second stepping motor is 0.5. When these two motors rotate in-phase, the output drive ratio of the first output shaft is 0.25. When these two motors rotate reversely, the output drive ratio of the first output shaft is 1.25. When these two motors rotate separately, the output drive ratio can be 0.75 or 0.5. In conclusion, the rotation status of two motors can be different so that four kinds of rotation speeds of the screw rod can be created.

The adjusting mechanism 100 is positioned in a laser collimator so that the moving block 7 is attached to the component that controls the horizontal position of the laser collimator. The horizontal sensor in the laser collimator is attached to the motors so that the rotation status of the motors controlled by the horizontal sensor drive the movement of the moving block to implement the leveling of the laser components in the laser collimator.

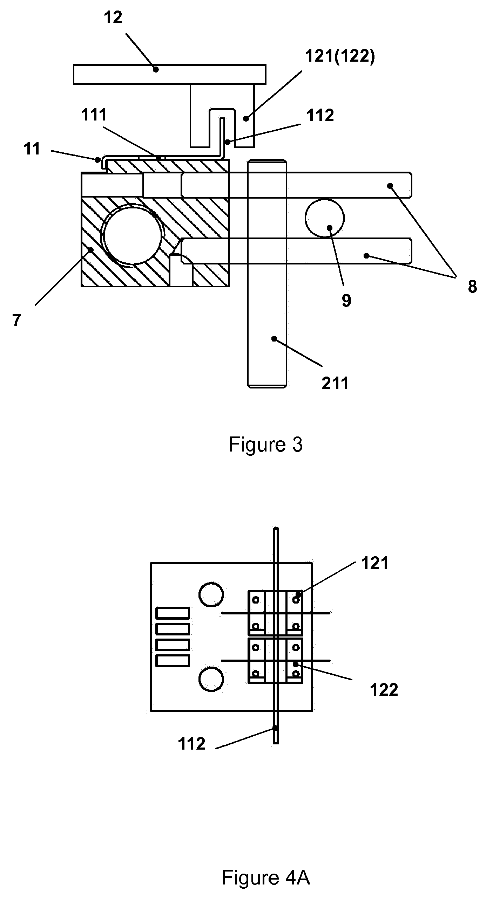

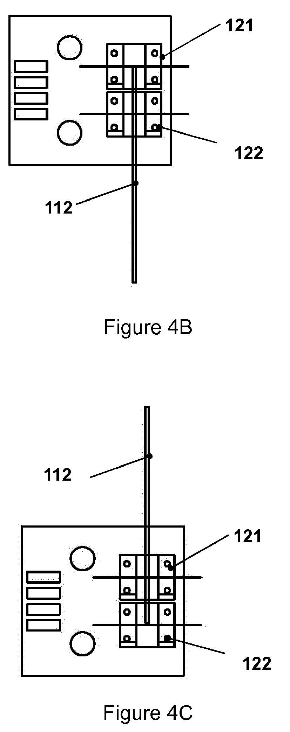

In order to avoid the damage caused by the excessive movement of the moving block, a limit piece 11 is provided on the moving block 7 and a limit PCB 12 is correspondingly provided in the second case body 2. According to the figure 1, 3 and 4A-4C, the limit piece 11 is a rectangular bent piece. The main body 111 of the limit piece is fixed with one side of the moving block 7 and the bent body 112 faces towards the limit PCB 12. The limit PCB 12 outstretches a pair of U-shaped grooves 121, 122 towards the limit piece 11. A photo tube is provided in the pair of the U-shaped groove, The bent body 112 of the limit piece moves in the pair of the U-shaped groove with the movement of the moving block 7. Users can determine whether the moving block is in the extreme position according to the position of the limit piece 11 in the U-shaped groove. As shown in figure 4A, the bent body 112 of the limit piece 11 shelter the photo tubes in the U-shaped grooves simultaneously when the moving block is in a normal position. Figure 4B and 4C show two extreme positions. As shown in figure 4B, the photo tube in the upper U-shaped groove 121 is not sheltered and the moving block 7 is on the bottom position. As shown in figure 4C, the photo tube in the lower U-shaped groove 122 is not sheltered and the moving block 7 is at the top position.

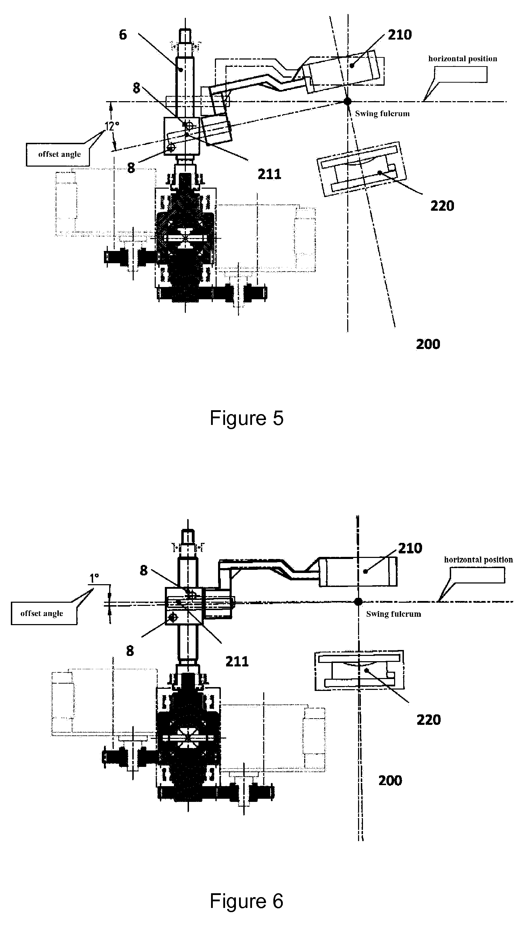

Figure 5 and figure 6 show a laser collimator with the adjusting mechanism 100. The laser collimator can be a laser leveling instrument or laser projector. The laser collimator comprises a housing(not shown) which is received in the swinging bracket 210, lasers (not shown) and horizontal sensor 220. Normally, these three components are in a fixed position, i.e, the horizontal position of these three remains identical. A connecting rod 211 is provided on the swinging bracket 220. The connecting rod 211 can be attached to the moving block 7 directly or pivotally.

In a preferable embodiment, the invention provides another connection method of the connecting rod and moving block. As shown in figure 1, the housing of the adjusting mechanism is provided with a limit rod 9 which is parallel to the screw rod 6. The moving block 7 stretches a pair of parallel rods 8 which are parallel to each other and have a gap towards the limit rod 9. The limit rod 9 is positioned between the parallel rods 8. Therefore, the moving block 7, the pair of the parallel 8 and limit rod 9 form a connecting area. The connecting rod 211 of the swinging bracket 210 extends into the connecting area so that the connection of the connecting rod 211 and moving block 7 is implemented.

In other embodiments, the connecting rod 211 extends into the gap between the parallel rods 8 so that the connection of the connecting rod 211 and moving block 7 is implemented.

The arrangement of the parallel rod 8 and limit rod 9 is to avoid the co-rotation of the moving block 7 and screw rod 6 and moving block 7 from not moving up and down. Other methods such as connecting the connecting rod 211 and moving block 7 directly or pivotally can also achieve the effect.

In order to relate the information of the horizontal position of the swinging bracket to the working status of the motors, the horizontal sensor 220 is electrically connected with the two stepping motors. When the information of the horizontal position detected by the horizontal sensor is offset from the horizontal position, for example, the offset angle is 12° as shown in figure 3, the horizontal sensor makes the two motors rotate reversely simultaneously so that the rotation speed of the screw rod is increased. When the rotation speed is increased, the swinging bracket can approach the horizontal position quickly. When the actual position of the swinging bracket is about to reach the horizontal position, for example, the offset angle is 1° as shown in figure 4, the horizontal sensor can make only one motor rotate or two motors rotate in the same direction simultaneously to reduce the rotation speed of the screw rod and increase the accuracy of adjustment.

In other embodiments, some control devices can be further provided(not shown). The control devices can control the rotation mode of the two stepping motors according to the position information feedbacked from the horizontal sensors.

It should be noted that the embodiment of the present invention has a preferred implementation, and will not limit the present invention in any form, and any technician skilled in the field may change or modify to equivalent effective embodiments by using the above-described technique. Whenever the contents do not depart from the technical proposal in the present invention, any revision or equivalent change and modification of the above embodiments according to the technical substance of the present invention are all in the scope of the technical proposal in the present invention.

## Claims

1. An adjusting mechanism, **characterized in that** it comprises:
- a differential, having a first output shaft, a second output shaft with a first driven gear and a second driven gear disposed at one end of the second output shaft extending out of the differential;
- a first stepping motor with a first drive gear provided on a rotary shaft thereof, the first drive gear being engaged with the first driven gear;
- a second stepping motor with a second drive gear provided on a rotary shaft thereof, the second drive gear being engaged with the second driven gear;
- a screw rod having a first end thereof connected to the first output shaft, and rotating along with the rotation of the first output shaft; and
- a moving block threadably connected to the screw rod, and moving in the axial direction of the screw rod with the rotation of the screw rod; wherein the first output shaft rotates with the in-phase rotation, reverse rotation or separate rotation of the first and second stepping motors, so as to drive the movement of the moving block.

2. The adjusting mechanism of claim 1, **characterized in that** the adjusting mechanism further comprises a housing, with the differential, first stepping motor, second stepping motor, screw rod and moving block all provided in the housing.

3. The adjusting mechanism of claim 2, **characterized in that** a screw rod stationary hole and screw rod stationary ring are provided on the housing, the second end of the screw rod is fixed on the housing through the screw rod stationary hole and the screw rod stationary ring.

4. The adjusting mechanism of claim 2, **characterized in that** a limit rod parallel to the screw rod is provided on the housing and that the moving block extends a pair of parallel rod and the limit rod is positioned between the pair of parallel rod.

5. The adjusting mechanism of claim 4, **characterized in that** the moving block, the pair of parallel rods and limit rod is positioned around to form a connecting area and a gap of the pair of parallel rod is provided along the axial direction of the screw rod.

6. The adjusting mechanism of claim 2, **characterized in that** a limit piece is provided on the moving block, the position of the housing opposite to the limit piece is provided with a limit PCB, the limit PCB and limit piece cooperate with each other to limit the moving distance of the moving block.

7. A laser collimator comprising a swinging bracket, a laser and a level sensor which are fixed and connected with each other, **characterized in that** the laser collimator comprises an adjusting mechanism of any one of claims 1-4 and 6, wherein the swing bracket is connected with the moving block of the adjusting mechanism, the level sensor is electrically connected with the first stepping motor and the second stepping motor, the first stepping motor and second stepping motor rotate in-phase, reversely or separately.

8. A laser collimator comprising a swinging bracket, a laser and a level sensor which are fixed and connected with each other, **characterized in that** the laser collimator comprises an adjusting mechanism of any one of claims 1-4 and 6, wherein the swinging bracket is provided with a connecting rod, the connecting rod extends to the gap between the pair of parallel rods, The level sensor is electrically connected with the first stepping motor and second stepping motor of the adjusting mechanism with the first stepping motor and second stepping motor rotating in-phase, reversely or separately.

9. A laser collimator comprises a swinging bracket, a laser and a level sensor which are fixed connected with each other, **characterized in that** the laser collimator comprises an adjusting mechanism of claim 5, wherein the swinging bracket is provided with a connecting rod, the connecting rod extends to the gap between the pair of parallel rods, The level sensor is electrically connected with the first stepping motor and second stepping motor of the adjusting mechanism, the first stepping motor and second stepping motor rotate in-phase, reversely or separately.

10. The laser collimator of any one of claims 7, 8 or 9, **characterized in that** the laser collimator further comprises a control device, applied to control the operation mode of the first stepping motor and second stepping motor based on the position information feedbacked from the level sensor.
